# EUROPÄISCHE PATENTANMELDUNG

(11) **EP 4 414 245 A1**
(43) Veröffentlichungstag der Anmeldung: **14.08.2024**
(21) Anmeldenummer: 23212843.9
(22) Anmeldetag: 29.11.2023
(51) Int. Cl.: B62D 25/14, B62D 29/00

(54) **VORDERWAGENSTRUKTUR SPRITZWAND**

(71) Anmelder: GF Casting Solutions AG, 8201 Schaffhausen (CH)
(72) Erfinder: KOHLBRENNER, Fabian, 79862 Höchenschwand (DE); PHILIPP, Stephan, 78262 Gailingen (DE)
(74) Vertreter: Fenner, Seraina

(57) **Zusammenfassung**

Spritzwand eines Kraftfahrzeugs, wobei sich die Spritzwand quer zur Fahrzeugrichtung erstreckt und dem Abtrennen zwischen Fahrgastraum und Frontraum vorzugsweise Motorraum dient, wobei die Spritzwand, einen oberen Querträger, zwei jeweils seitlich der Spritzwand angeordnete innere A-Säulen und jeweils an den inneren A-Säulen angeordnete Aufnahmeelemente für den Schweller und den Längsträger aufweist, wobei die Spritzwand einen unteren Querträger aufweist und die Spritzwand als einteiliges bzw. einstückiges Leichtmetalldruckgussteil ausgebildet ist.

## Beschreibung

Die Erfindung betrifft eine Spritzwand eines Kraftfahrzeugs, wobei sich die Spritzwand quer zur Fahrzeugrichtung erstreckt und dem Abtrennen zwischen Fahrgastraum und Frontraum vorzugsweise Motorraum dient, wobei die Spritzwand, einen oberen Querträger, zwei jeweils seitlich der Spritzwand angeordnete innere A-Säulen und jeweils an den inneren A-Säulen angeordnete Aufnahmeelemente für den Schweller und den Längsträger aufweist und dessen Verfahren zur Herstellung.

Die DE 10 2008 062 007 A1 offenbart eine Schottwand, die mehrteilig ausgebildet ist, nämlich aus einem unteren Querträger, einem Schottwandelement und einem oberen Verstärkungsträger, wobei der untere Querträger als Leichtmetalldruckgussbauteil ausgebildet ist und das Schottwandelement wie auch der obere Verstärkungsträger aus einem Leichtmetallblech ausgebildet sind. Die Elemente werden bspw. durch Verschweissen, Verschrauben, Verkleben oder auch Clinchen miteinander verbunden.

Nachteilig hier ist der hohe Aufwand des Verbindens der einzelnen Teile miteinander.

Die DE 10 2008 062 004 A1 offenbart eine Karosseriestruktur, bei der die Schottwand einen Flansch aufweist und mit dem Querträger, der ebenfalls einen Flansch aufweist, verbunden wird. Wobei die Schottwand aus einem Leichtmetallblech ausgebildet ist und mit dem Querträger vorzugsweise verschweisst oder verklebt ist. Auch hier besteht der Nachteil des hohen Zeitaufwands bei der Verbringung der einzelnen Elemente miteinander, bevor das Karosseriestrukturteil in die Fahrzeugkarosserie eingebaut werden kann.

Die EP 409 916 A1 offenbart ein einteiliges Strukturbauteil, das eine querverlaufenden Spritzwand mit seitlich daran angeordneten A-Säulen zeigt. Nachteilig hierbei ist, dass ein unterer Querträger noch separat am einteiligen Strukturbauteil angefügt werden muss.

Es ist Aufgabe der Erfindung eine Spritzwand und ein damit verbundenes Verfahren vorzuschlagen, das die Produktionszeit verkürzt, Logistikaufwendungen reduziert und möglichst wenige manuelle Arbeitsschritte benötigt, wodurch die Wirtschaftlichkeit des Teils erhöht werden soll wie auch, dass die Spritzwand ein möglichst geringes Gewicht aufweist.

Diese Aufgabe wird erfindungsgemäss dadurch gelöst, dass die Spritzwand einen unteren Querträger aufweist und die Spritzwand (1) als einteiliges bzw. einstückiges Leichtmetalldruckgussteil ausgebildet ist.

Die erfindungsgemässe Spritzwand vorzugsweise Vorderwagenstruktur Spritzwandeines eines Kraftfahrzeugs erstreckt sich quer zur Fahrzeugrichtung und dient dem Abtrennen zwischen Fahrgastraum und Frontraum vorzugsweise Motorraum. Die erfindungsgemässe Spritzwand weist einen oberen Querträger, zwei jeweils seitlich der Spritzwand angeordnete innere A-Säulen und jeweils an den inneren A-Säulen im unteren Bereich angeordnete Aufnahmeelemente für den Schweller und den Längsträger auf. Vorzugsweise sind die inneren A-Säulen spiegelsymmetrisch ausgebildet. Zudem weist die Spritzwand einen unteren Querträger auf. Die Elemente wie innere A-Säulen, oberer und unterer Querträger, Aufnahmeelemente an den Schweller und den Längsträger benötigen keine Fügeprozesse, um miteinander zu einer Spritzwand verbunden zu werden, sondern die erfindungsgemässe Spritzwand ist als ein Ganzes ausgebildet.

Die erfindungsgemässe Spritzwand ist als einteiliges bzw. einstückiges Leichtmetalldruckgussteil ausgebildet, was einen dünnwandigen Aufbau erlaubt und trotzdem die gewünschte Stabilität erreicht.

Als vorteilhaft hat sich gezeigt, wenn mindestens eine Diagonalrippe zwischen Aufnahmeelement-Schweller und Aufnahmeelemente-Längsträger angeordnet ist. Dies dient dem Fahrgastzellenschutz, da bei einem Front-Aufprall die Kraft über die Diagonalrippe vom Längsträger in den Schweller abgeleitet wird. Vorzugsweise sind zwei bis drei Diagonalrippen an einer inneren A-Säule zwischen dem Aufnahmeelement-Schweller und Aufnahmeelemente-Längsträger angeordnet.

Als bevorzugte Ausführungsform hat sich gezeigt, wenn der untere Querträger zur Anbindung eines Batteriegehäuses ausgebildet ist. Vorzugsweise sind entsprechende Anbindungselement wie beispielsweise Anschraubpunkte im Leichtmetalldruckgussbauteil angeordnet, um ein Batteriegehäuse am unteren Querträger durch Fügen anzubringen.

Vorzugsweise ist der untere Querträger zur Anbindung eines Fahrwerk-Hilfsrahmens ausgebildet. Vorzugsweise sind entsprechende Anbindungselement wie beispielsweise Anschraubpunkte im Leichtmetalldruckgussbauteil angeordnet, um einen Fahrwerk-Hilfsrahmen am unteren Querträger durch Fügen anzubringen. Selbstverständlich können auch andere wie auch weitere Anbindungspunkte in der Spritzwand integriert werden, je nach Fahrzeugtyp.

Es ist vorteilhaft, wenn das Aufnahmeelement C-förmig ausgebildet ist, dadurch wird der Schweller und/oder der Längsträger formschlüssig umschlossen. Die C-Form des Aufnahmeelements dient zudem als Führung des Schwellers und /oder Längsträgers.

Es ist vorteilhaft wenn die Spritzwand dünnwandig ausgebildet ist, wobei die Bauteilwandung zwischen 1 und 8 mm liegt, vorzugsweise zwischen 2 und 5 mm. Vorzugsweise weisen die Bauteilwandungen unterschiedliche Dicken auf entsprechend ihrer Positionierung an der Spritzwand. Durch die unterschiedlichen Dicken der Bauteilwandungen wird das Fliessverhalten in der Spritzwand optimiert bzw. eine Fülloptimierung erreicht. Einerseits können die einzelnen Bauteilwandungen unterschiedliche Dicken aufweisen, entsprechend ihrer Anordnung, andererseits kann eine Bauteilwandung auch selbst unterschiedliche Dicken aufweisen, das heisst also sie kann sich verjüngen oder verbreitern um wie oben erwähnt eine Fülloptimierung zu erzielen.

Eine bevorzugte Ausführungsform der erfindungsgemässen Spritzwand weist am unteren Querträger zur Versteifung eine Verrippung auf. Vorzugsweise ist beidseitig des unteren Querträgers eine Verrippung angeordnet, das heisst in Richtung Fahrgastraum wie auch in Frontraumrichtung. Es ist vorteilhaft, wenn sich die Rippen von schräg von oben nach unten über den kompletten unteren Querträger erstrecken. Vorzugsweise erstrecken sich die Rippen in regelmässigen oder unregelmässigen Abständen über die komplette Länge des unteren Querträgers verteilt sind.

Vorzugsweise weist der obere Querträger zur Versteifung eine Verrippung auf. Die Rippen sind vorzugsweise am oberen Querträger gegen Fahrgastraum innenseite gerichtet. Es ist vorteilhaft, wenn sich die Verrippung über die komplette Länge des oberen Querträgers erstreckt, also von der einen inneren A-Säule bis zur gegenüberliegenden inneren A-Säule. Vorzugsweise sind die Rippen kreuzartig ausgebildet.

Gemäss einer bevorzugten Ausführungsform ist das die erfindungsgemässe Spritzwand aus einer Al- oder Mg-Legierung hergestellt.

Diese Aufgabe wird erfindungsgemäss dadurch gelöst, dass die erfindungsgemässe Spritzwand im Druckgussverfahren hergestellt wird. Durch das Herstellen der erfindungsgemässen Spritzwand im Druckgussverfahren ist eine komplexe, dünnwandige und dennoch stabile Formgebung möglich. Zudem können diverse Anbauteile direkt in die einteilige Spritzwand integriert werden wodurch zusätzliche Montageschritte vermieden werden.

Als vorteilhaft hat sich gezeigt, wenn die erfindungsgemässe Spritzwand nach dem Vergiessen einer Wärmebehandlung unterzogen wird. Dadurch werden die gewünschten Eigenschaften wie beispielsweise die Dehnung des Werkstoffs der Spritzwand erhöht. Eine Wärmebehandlung kann ganzteilig sowie auch nur partiell erfolgen.

Alle Ausgestaltungmöglichkeiten sind untereinander frei kombinierbar sowie zur Vermeidung von Wiederholungen sich die Merkmale der Vorrichtung auch automatisch auf das Verfahren und umgekehrt beziehen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässen Spritzwand vom Frontraum gesehen,
- Fig. 2: eine dreidimensionale Ansicht einer erfindungsgemässen Spritzwand vom Fahrgastraum gesehen,
- Fig. 3: einen Ausschnitt einer Seitenansicht des unteren Bereichs einer inneren A-Säule und
- Fig. 4: eine Ansicht von unten auf die erfindungsgemässe Spritzwand.

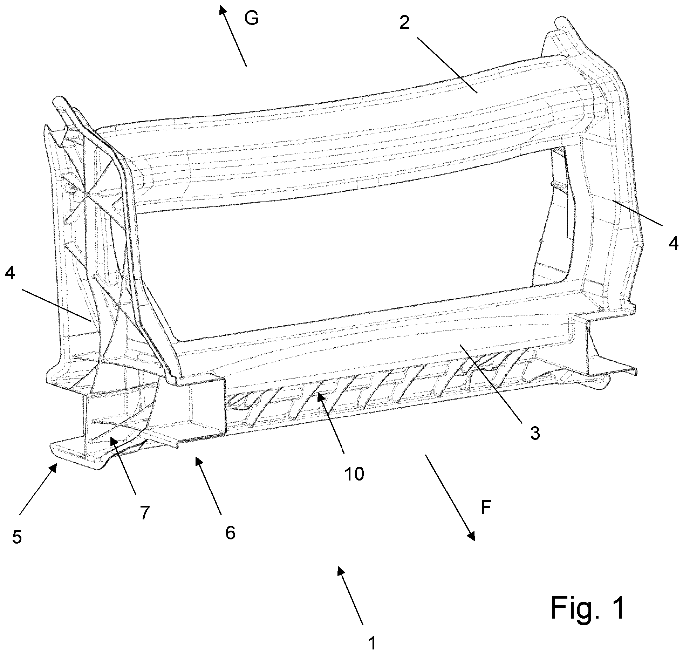

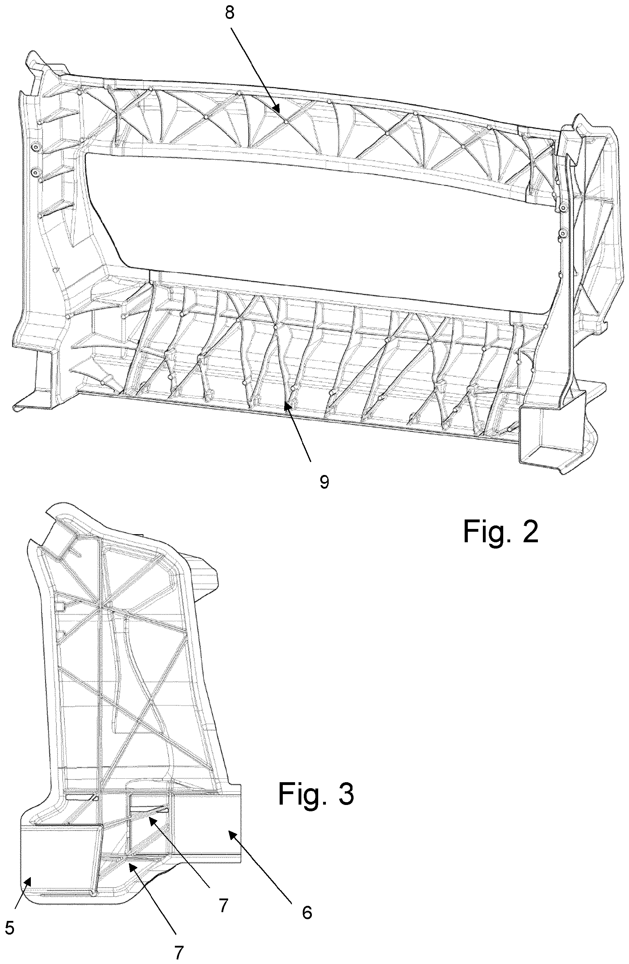

Die in Fig. 1 dargestellte Zeichnung zeigt eine erfindungsgemässe Spritzwand 1 eines Kraftfahrzeugs. Die Spritzwand 1 ist als einteiliges bzw. einstückiges Leichtmetalldruckgussteil ausgebildet. Die Spritzwand 1 beinhaltet einen oberen Querträger 2 und davon seitlich angeordnete innere A-Säulen 4 sowie einen unteren Querträger 3. Im unteren Bereich der inneren A-Säulen 4 sind Aufnahmeelemente 5, 6 für den Schweller und den Längsträger integral angeordnet bzw. ebenfalls in die erfindungsgemässe druckgegossenen Spritzwand 1 integriert. Es ist vorteilhaft, wie das aus Fig. 2 ersichtlich ist, wenn der obere und untere Querträger 2, 3 eine Verrippung 8, 9 aufweist, damit die Spritzwand 1 den Steifigkeits- wie auch Festigkeitsanforderungen genügt. Vorzugsweise ist die Verrippung 8 am oberen Querträger kreuzartig ausgebildet und erstreckt sich über die komplette Querträgerlänge bzw. von der einen inneren A-Säule 4 bis zur gegenüberliegenden inneren A-Säule 4. Der untere Querträger 3 weist vorzugsweise in Richtung des Fahrgastraums G wie auch in Richtung des Frontraums F, eine Verrippung 9, 10 auf. In Fig. 3 ist der untere Bereich der Seitenansicht einer inneren A-Säule dargestellt.

Daraus ist gut ersichtlich, dass die Aufnahmeelemente 5, 6 für den Schweller und den Längsträger c-förmig ausgebildet sind. Was eine formschlüssige Anbindung des Schwellers und Längsträgers an die Spritzwand 1 ermöglicht. Zudem sind die Diagonalrippen 7, welche zwischen den Aufnahmeelementen 5, 6 verlaufen ersichtlich, welche den Vorteil der Kraftumleitung mit sich bringen.

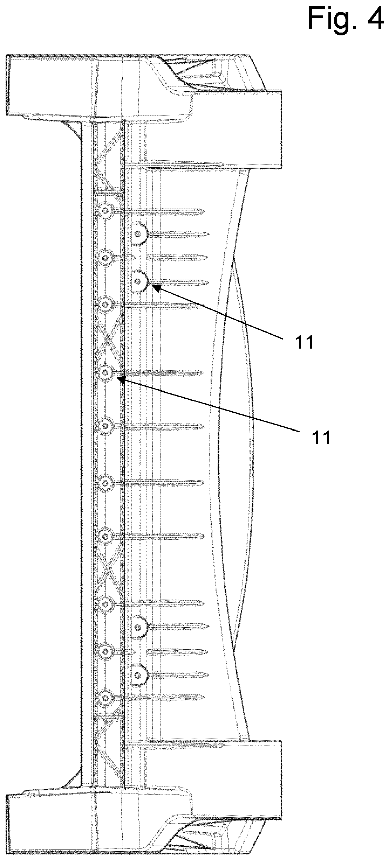

Fig. 4 zeigt die vorzugsweise integrierten Anbindungselemente 11 um einen Fahrwerk-Hilfsrahmen und/oder ein Batteriegehäuse an der Spritzwand 1 durch Fügen anzubringen. Die Anbindungselemente 11 sind vorzugsweise als Anschraubpunkte ausgebildet.

### Bezugszeichenliste

- 1: Spritzwand
- 2: Oberer Querträger
- 3: Unterer Querträger
- 4: Innere A-Säule
- 5: Aufnahmeelement-Schweller
- 6: Aufnahmeelement-Längsträger
- 7: Diagonalrippe
- 8: Verrippung obere Querstrebe
- 9: Verrippung unter Querstrebe fahrgastraumseitig
- 10: Verrippung unter Querstrebe frontraumseitig
- 11: Anbindungselemente
- G: Fahrgastraum
- F: Frontraum

## Patentansprüche

1. Spritzwand (1) eines Kraftfahrzeugs, wobei sich die Spritzwand (1) quer zur Fahrzeugrichtung erstreckt und dem Abtrennen zwischen Fahrgastraum und Frontraum vorzugsweise Motorraum dient, wobei die Spritzwand (1), einen oberen Querträger (2), zwei jeweils seitlich der Spritzwand (1) angeordnete innere A-Säulen (4) und jeweils an den inneren A-Säulen (4) angeordnete Aufnahmeelemente (5, 6) für den Schweller und den Längsträger aufweist, **dadurch gekennzeichnet, dass** die Spritzwand (1) einen unteren Querträger (3) aufweist und die Spritzwand (1) als einteiliges bzw. einstückiges Leichtmetalldruckgussteil ausgebildet ist.

2. Spritzwand (1) nach Anspruch 1, **dadurch gekennzeichnet, dass** mindestens eine Diagonalrippe (7) zwischen Aufnahmeelement-Schweller (5) und Aufnahmeelemente-Längsträger (5) angeordnet ist.

3. Spritzwand (1) nach Anspruch 1 oder 2, **dadurch gekennzeichnet, dass** der untere Querträger (3) zur Anbindung eines Batteriegehäuses ausgebildet ist und Anbindungselemente (11) aufweist.

4. Spritzwand (1) nach Anspruch 1 bis 3, **dadurch gekennzeichnet, dass** der untere Querträger zur Anbindung eines Fahrwerk-Hilfsrahmens ausgebildet ist und Anbindungselemente (11) aufweist.

5. Spritzwand (1) nach Anspruch 1 bis 4, **dadurch gekennzeichnet, dass** das Aufnahmeelement (5) C-förmig ausgebildet ist um den Schweller formschlüssig zu umschliessen.

6. Spritzwand (1) nach Anspruch 1 bis 5, **dadurch gekennzeichnet, dass** das Aufnahmeelement (6) C-förmig ausgebildet ist um den Längsträger formschlüssig zu umschliessen.

7. Spritzwand (1) nach Anspruch 1 bis 6, **dadurch gekennzeichnet, dass** die Spritzwand (1) dünnwandig ausgebildet ist, wobei die Bauteilwandung zwischen 1 und 8 mm liegt, vorzugsweise zwischen 2 und 5 mm.

8. Spritzwand (1) nach Anspruch 1 bis 7, **dadurch gekennzeichnet, dass** der untere Querträger (3) zur Versteifung eine Verrippung aufweist.

9. Spritzwand (1) nach Anspruch 1 bis 8, **dadurch gekennzeichnet, dass** der obere Querträger (3) zur Versteifung eine Verrippung aufweist.

10. Spritzwand (1) nach Anspruch 1 bis 9, **dadurch gekennzeichnet, dass** die Spritzwand (1) aus einer Al- oder Mg-Legierung hergestellt ist.

11. Verfahren zur Herstellung einer Spritzwand (1) nach einem der Ansprüche 1 bis 10, **dadurch gekennzeichnet, dass** die Spritzwand (1) im Druckgussverfahren hergestellt wird.
